# FASCICULE DE BREVET EUROPEEN

(11) **EP 3 046 703 B1**
(45) Date de publication et mention de la délivrance du brevet: **17.07.2019**
(21) Numéro de dépôt: 14784309.8
(22) Date de dépôt: 17.09.2014
(51) Int. Cl.: B23K 26/04, B23K 26/70, B22F 3/105, B22F 5/00, B22F 5/04, B23K 26/00, B23K 26/06, B33Y 50/02, B23K 26/342, B29C 64/386, B23K 26/03, B23K 101/34, B23K 103/10, B23K 103/16

(54) **PROCÉDÉ DE CONTRÔLE DE LA DENSITÉ D'ÉNERGIE D'UN FAISCEAU LASER PAR ANALYSE D'IMAGE ET DISPOSITIF CORRESPONDANT**
VERFAHREN ZUR ÜBERWACHUNG DER ENERGIEDICHTE EINES LASERSTRAHLS MITTELS BILDANALYSE UND ENTSPRECHENDE VORRICHTUNG
METHOD FOR MONITORING THE ENERGY DENSITY OF A LASER BEAM BY IMAGE ANALYSIS AND CORRESPONDING DEVICE

(30) Priorité: 18.09.2013 FR 1358963
(43) Date de publication de la demande: 27.07.2016
(73) Titulaire: Safran Aircraft Engines, 75015 Paris (FR)
(72) Inventeur: BAUDIMONT, Cyrille, 77550 Moissy Cramayel Cedex (FR); FOUQUET, Julie, 77550 Moissy Cramayel Cedex (FR); MONNET, Didier, 77550 Moissy Cramayel Cedex (FR)
(74) Mandataire: Regimbeau
(86) Numéro de dépôt international: PCT/FR2014/052312
(87) Numéro de publication internationale: WO 2015/040327

(56) Documents cités:
- EP-A2- 0 911 109
- EP-A2- 1 466 718
- DE-A1- 10 320 085
- DE-A1-102010 027 910
- US-A- 5 360 960
- US-A1- 2004 061 149
- US-A1- 2011 194 574
- US-A1- 2012 314 210
- Arkadiusz J. Antonczak ET AL: "The influence of process parameters on the laser-induced coloring of titanium", Applied physics A materials science & processing, vol. 115, no. 3, 28 August 2013 (2013-08-28), pages 1003-1013, XP055484649, Berlin/Heidelberg ISSN: 0947-8396, DOI: 10.1007/s00339-013-7932-8
- Mohammed Belal: "Development of a laser based inspection system for surface defect detection", , 1 April 2012 (2012-04-01), XP055484875, Retrieved from the Internet: URL:http://publications.lib.chalmers.se/re cords/fulltext/192390/192390.pdf [retrieved on 2018-06-15]
- JACOB J H ET AL: "An Absolute Method of Measuring Energy Outputs from CO2 Lasers", THE REVIEW OF SCIENTIFIC INSTRUMENTS,, vol. 44, no. 4, 1 April 1973 (1973-04-01), pages 471-474, XP001414511,
- Güngör Bahadir: "The weldability of stainless steel with solid state laser", , 1 August 2013 (2013-08-01), XP055484895, Retrieved from the Internet: URL:http://publications.lib.chalmers.se/re cords/fulltext/192390/192390.pdf [retrieved on 2018-06-15]

## Description

### DOMAINE DE L'INVENTION

L'invention concerne le domaine de la fabrication de pièces par fusion sélective par laser SLM (acronyme anglais de Selective Laser Melting), à savoir une technique de fabrication additive capable de produire des pièces métalliques à l'aide de lasers de haute puissance faisant fusionner progressivement et localement, c'est-à-dire de façon sélective, une poudre métallique dans une atmosphère contrôlée.

### ARRIERE-PLAN TECHNOLOGIQUE

La fusion sélective par laser est un procédé permettant de fabriquer un corps moulé, par exemple un prototype d'un produit ou d'un composant, en fonction de données de CAO en trois dimensions d'un modèle d'une pièce moulée par dépôt de couches d'un matériau sous forme de poudre. Plusieurs couches de la poudre sont déposées successivement les unes sur les autres, de sorte que chaque couche de poudre est chauffée à une température déterminée par un faisceau laser focalisé de forte puissance (de 200W à quelques kW) appliqué sur une zone donnée de la couche de poudre correspondant à une aire de section transversale déterminée du modèle du corps moulé, avant le dépôt de la couche suivante. Le faisceau laser est guidé au-dessus de chaque couche de poudre en conformité avec les données CAO de la surface transversale déterminée du modèle, de telle sorte que chaque couche de poudre est fixée à la couche sous-jacente. La répétition de l'apport de poudre et de sa fusion par le laser permet de faire épaissir progressivement la pièce et d'obtenir les formes souhaitées.

Un exemple d'un tel procédé de fusion sélective par laser a notamment été décrit dans les documents FR 2 970 887 et US 6 215 093.

Afin d'obtenir une pièce de qualité métallurgique et de dimension respectant les tolérances imposées notamment dans le domaine des turbomachines, il est nécessaire que la densité d'énergie du faisceau laser reste constante dans le plan de fabrication (le lit de poudre) et durant la période d'exposition au laser.

La densité d'énergie dépend de trois paramètres : la puissance, la vitesse et la taille du faisceau laser.

Actuellement, la surveillance de la densité d'énergie du faisceau laser est obtenue indirectement en mesurant indépendamment ces trois paramètres. Néanmoins, cette surveillance présente l'inconvénient de nécessiter des mesures individuelles qui sont réalisées successivement par des appareils différents. En plus d'être longue et difficilement industrialisable, cette surveillance de la densité d'énergie du faisceau laser n'est pas robuste, les mesures risquant d'être faussées par des dérives des appareils utilisés. Ces appareils sont en outre spécifiques et nécessitent souvent une formation et des compétences particulières pour être utilisés, sont en outre coûteux, fragiles et longs à mettre en oeuvre, et doivent être périodiquement vérifiés. Enfin, l'ensemble de l'espace de fabrication n'est pas accessible pour permettre ces mesures.

Il a été proposé dans le document EP 1 466 718un procédé de contrôle de la température sur une zone cible (tel qu'un lit de poudre), à partir d'une image de la zone cible acquise à l'aide d'un système de vision thermique, tel qu'une caméra infrarouge. La température ainsi déterminée est alors comparée à une température désirée, ce qui permet d'améliorer le contrôle de la température globale du lit de poudre. Toutefois, ce procédé ne permet aucunement de déterminer si la densité d'énergie du faisceau laser est stable, ou si l'un des paramètres dont elle dépend est instable. En effet, il est uniquement question d'adapter la température du faisceau laser afin d'éviter des différences de température au niveau du lit de poudre qui seraient préjudiciables à la qualité de la pièce que l'on cherche à fabriquer.

Le document DE 103 20 085 quant à lui décrit un procédé de fabrication d'une pièce par fusion sélective, au cours duquel la densité lumineuse est adaptée afin d'améliorer la densité finale de la pièce. L'adaptation de la densité lumineuse est en particulier adaptée grâce à une caméra CCD, qui mesure l'épaisseur de la poudre à fusionner, et un pyromètre, qui détermine sa température. Ce document ne porte donc pas sur le contrôle de la stabilité de la densité d'énergie d'un faisceau laser.

Enfin, le document DE 10 2010 027910 porte sur un procédé de fabrication d'une pièce par fusion laser, au cours duquel la puissance du laser est mesurée régulièrement afin de déceler d'éventuels écarts par rapport à des valeurs de puissance attendues. Ce document propose donc uniquement de mesurer l'un des paramètres jouant un rôle sur la densité d'énergie du faisceau laser, les autres paramètres n'étant pas déterminés.

Le document US 2004/0061149 propose de mesurer et de contrôler une intensité et un profil de faisceau laser pour qu'ils coïncident avec une intensité et un profil de référence.

Le document US 2012/0314210 propose de mesurer l'intensité d'un faisceau laser après sa réflexion sur un support comprenant de l'aluminium anodisé pour analyser le profil du faisceau laser.

Le document Arkadiusz J. Antonczak et al. « The influence of process parameters on the laser-induced coloring of titanium », Applied Physics A materials science & processing, vol. 115, no. 3, 28 août 2013, décrit l'influence sur la couleur obtenue pour un revêtement d'oxyde de titane de paramètres du faisceau laser et du matériau.

Aucun de ces documents ne propose donc de moyen fiable et rapide de détecter une dérive des paramètres de la densité d'énergie de manière simple et pour un coût modéré.

### RESUME DE L'INVENTION

Un objectif de l'invention est donc de proposer un procédé de contrôle de la densité d'énergie d'un faisceau laser et un dispositif de contrôle associé surmontant les inconvénients de l'état de la technique, qui permette de détecter rapidement une dérive d'une partie des paramètres (puissance, vitesse, taille du faisceau laser) pour un coût modéré en comparaison avec l'art antérieur et qui soit industrialisable, et ce dans tout l'espace de fabrication.

Pour cela, l'invention propose un procédé de contrôle de la densité d'énergie d'un faisceau laser à partir d'au moins deux paramètres du faisceau laser, le procédé comprenant les étapes suivantes :
- appliquer régulièrement le faisceau laser sur un support de référence et mesurer, à chaque application, une intensité lumineuse obtenue sur ce support de référence,
- identifier une variation de l'intensité lumineuse sur le support de référence entre au moins deux mesures, et
- lorsque la variation de l'intensité lumineuse est supérieure à un seuil donné, déterminer le ou les paramètres instables de la densité d'énergie du faisceau laser.

Certaines caractéristiques préférées mais non limitatives du procédé de contrôle décrit ci-dessus sont les suivantes :
- la densité d'énergie du faisceau laser est contrôlée à partir de trois paramètres comprenant notamment la puissance, la vitesse et la taille du faisceau laser,
- l'étape d'application et de mesure régulière de l'intensité lumineuse sur le support de référence comprend les sous-étapes suivantes :
   (i) appliquer le faisceau laser sur un support de référence et acquérir une image du faisceau laser sur ledit support de référence, afin d'obtenir une image de référence,
   (ii) déterminer l'intensité lumineuse au point d'application du faisceau laser dans l'image de référence, et
   (iii) régulièrement, appliquer le faisceau laser sur le support de référence et acquérir une image du faisceau laser sur ledit support de référence, afin d'obtenir une image de contrôle, et déterminer l'intensité lumineuse sur le support de référence au point d'application du faisceau laser dans l'image de contrôle, et
   l'étape d'identification d'une variation d'intensité lumineuse comprend les sous-étapes suivantes :
   (iv) comparer l'intensité lumineuse de l'image de contrôle ainsi obtenue avec l'intensité lumineuse de l'image de référence, et
   (v) en déduire la variation de la densité d'énergie du faisceau laser,
- l'intensité lumineuse est déterminée en mesurant les nuances de gris de l'image de référence et de l'image de contrôle,
- les nuances de gris de l'image de référence et de l'image de contrôle sont mesurées en plusieurs points, de sorte que l'intensité lumineuse est déterminée en moyennant le profil d'intensité en chaque point de chaque image,
- le procédé comprend en outre une étape initiale, préalablement à l'application du faisceau laser sur une surface de référence afin d'acquérir l'image de référence, au cours de laquelle on détermine une valeur initiale des paramètres, et, lorsque la variation de l'intensité lumineuse est supérieure à un seuil donné, le procédé comprend en outre les sous-étapes au cours desquelles on détermine la valeur des paramètres du faisceau laser et on la compare à la valeur initiale desdits paramètres afin d'identifier le ou les paramètres instables, et on modifier le laser afin de re-stabiliser ledit(lesdits) paramètre(s) instable(s),
- les étapes (i) à (iii) sont réitérées avec le faisceau laser une fois modifié, afin de définir une nouvelle image de référence, et
- l'étape initiale est également réitérée.

L'invention propose également un dispositif de contrôle de la densité d'énergie d'un faisceau laser à partir d'au moins deux paramètres du faisceau laser, lesdits paramètres comprenant une puissance, une vitesse et/ou une taille du faisceau laser, le dispositif étant apte à contrôler la densité d'énergie du faisceau laser comme indiqué ci-dessus, et comprenant:
- un système d'acquisition d'images, configuré pour acquérir des images du faisceau laser sur le support de référence, et
- un système de traitement d'images, adapté pour comparer l'intensité lumineuse des différentes images acquises par le système d'acquisition d'images et identifier une variation de l'intensité lumineuse sur le support de référence entre au moins deux mesures, et
- des moyens de traitement de données, adaptés pour déterminer, à partir de la variation de l'intensité lumineuse, si au moins l'un des paramètres du faisceau laser est instable.

Certaines caractéristiques préférées mais non limitatives du dispositif de contrôle sont les suivantes :
- le support de référence comprend un revêtement homogène,
- le support de référence comprend une plaque en alliage d'aluminium,
- la plaque en alliage d'aluminium est anodisée et comprend une couche d'anodisation,
- la couche d'anodisation est de couleur noire,
- la couche d'anodisation présente une épaisseur comprise entre 0.5% et 3% d'une épaisseur de la plaque en alliage d'aluminium, de préférence de l'ordre de 1%,
- l'épaisseur de la plaque en alliage d'aluminium est de l'ordre d'1 mm et l'épaisseur de la couche d'anodisation est de l'ordre de 0.01 mm.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

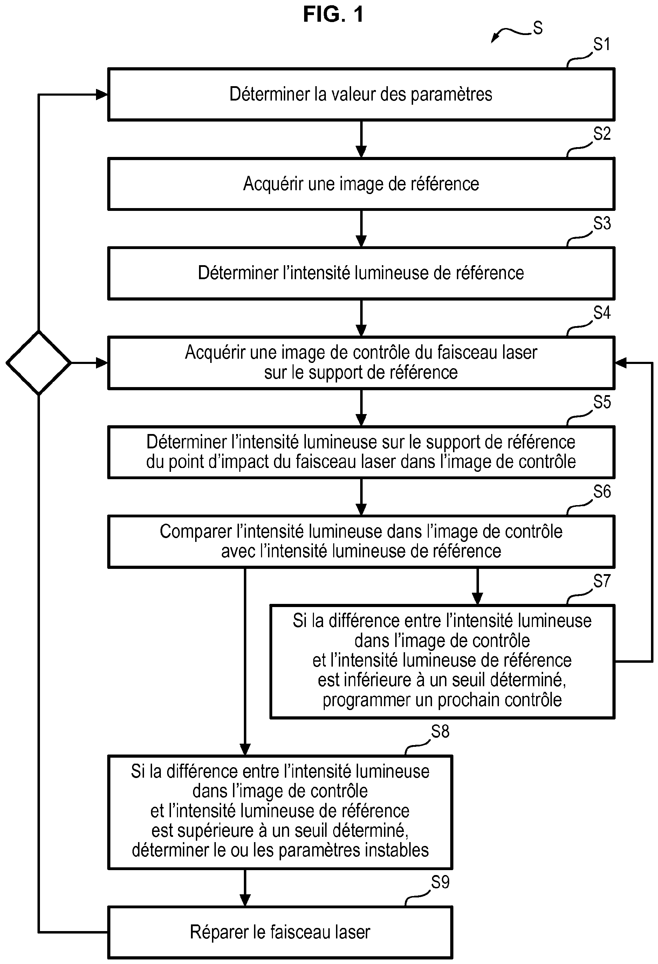

La figure 1 est un organigramme représentant différentes étapes d'un exemple de réalisation du procédé de contrôle de la densité d'énergie d'un faisceau laser conforme à l'invention,
La figure 2 est un graphique qui illustre un exemple de profil d'intensité d'une image, c'est-à-dire les nuances de gris en fonction de la distance (en pixels),
La figure 3 illustre un exemple de dégradation de la densité d'énergie d'un faisceau laser, et

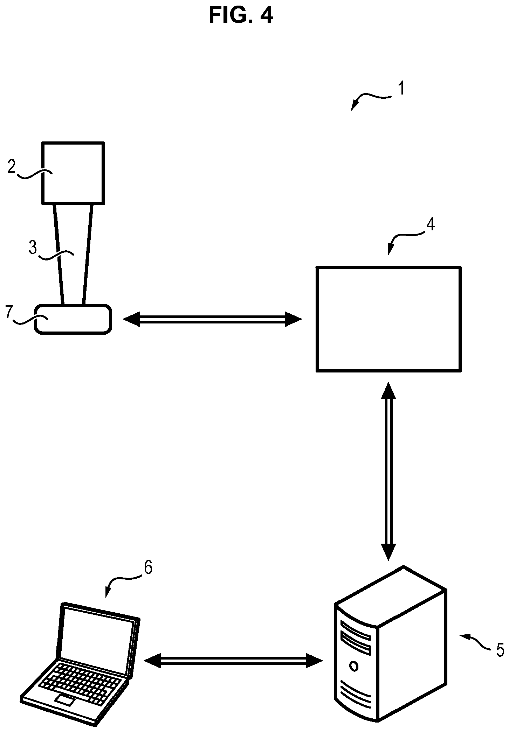

La figure 4 illustre schématiquement un exemple de dispositif de contrôle de la densité d'énergie d'un faisceau laser conforme à l'invention.

### DESCRIPTION DETAILLEE D'UN MODE DE REALISATION

Afin de contrôler la constance de la densité d'énergie d'un faisceau laser 3 dans le plan de fabrication et durant le temps d'exposition de la poudre au laser, l'invention propose un procédé S de contrôle de la densité d'énergie à partir d'au moins deux paramètres du faisceau laser 3 comprenant les étapes suivantes :
- appliquer régulièrement le faisceau laser 3 sur un support de référence 7 et mesurer S4, à chaque application, l'intensité lumineuse obtenue sur ce support de référence,
- identifier S6, S7, S8 une variation de l'intensité lumineuse sur le support de référence 7 entre au moins deux mesures, et
- lorsque la variation de l'intensité lumineuse est supérieure à un seuil donné, déterminer le ou les paramètres instables de la densité d'énergie du faisceau laser 3 S8.

L'invention se base sur le fait que l'intensité lumineuse obtenue en appliquant un faisceau laser 3 sur un support donné est représentative de la densité d'énergie de ce laser 2. Il est ainsi possible de limiter le nombre de paramètres mesurés à l'intensité lumineuse obtenue sur le support de référence 7 uniquement, puis d'en déduire des variations de la densité d'énergie du laser 3, et donc l'instabilité de l'un au moins de ses paramètres, de sorte que le nombre et la difficulté des mesures se trouve fortement réduits par rapport à l'art antérieur. Le procédé S est donc plus rapide et plus facile à mettre en oeuvre.

Par ailleurs, le procédé S peut être mis en oeuvre à l'aide d'un dispositif de contrôle 1 de la densité d'énergie comprenant des appareils courants, ne nécessitant pas ou peu de formation ni de compétences particulières, tels que :
- un système d'acquisition d'images 4, configuré pour acquérir des images du faisceau laser 3 sur le support de référence 7, et
- un système de traitement d'images 5, adapté pour comparer l'intensité lumineuse des différentes images acquises par le système d'acquisition d'images 4 et identifier une variation de l'intensité lumineuse sur le support de référence 7 entre au moins deux mesures, et
- des moyens de traitement de données 6, adaptée pour déterminer, à partir de la variation de l'intensité lumineuse, si au moins l'un des paramètres du faisceau laser 3 est instable.

Par exemple, le système d'acquisition d'images 4 peut être un scanner, un appareil photo ou encore une caméra, tandis que le système de traitement d'images 5 peut comprendre un logiciel de traitement d'images et les moyens de traitement de données 6 peuvent comprendre une unité centrale, éventuellement connectée à des moyens d'interface 6 adaptés pour afficher les résultats du procédé S.

Par ailleurs, les paramètres du faisceau laser 3 à partir desquels il est possible de contrôler la densité d'énergie du faisceau laser 3 sont choisis parmi la puissance, la vitesse et la taille du faisceau laser 3. De préférence, les trois paramètres sont examinés au cours du procédé S de contrôle.

Les intensités lumineuses sont comparées à une intensité lumineuse de référence, qui correspond à l'intensité lumineuse sur le support de référence 7 représentative de la densité d'énergie du faisceau laser 3 lorsque ses paramètres sont stables, mesurée dans des conditions identiques ou similaires.

L'intensité lumineuse de référence peut être mesurée comme suit.

Au cours d'une première étape S1, les paramètres (puissance, vitesse et/ou taille du faisceau lumineux) sont mesurés de manière conventionnelle avec les appareils spécifiques. Si les mesures obtenues ne sont pas conformes, le laser 2 est réparé, et les mesures sont à nouveau effectuées afin de vérifier la cohérence des paramètres après réparation.

Les mesures obtenues sont alors enregistrées, par exemple dans les moyens de traitement de données 6.

On détermine alors l'intensité lumineuse de référence.

Pour cela, le faisceau laser 3 est appliqué sur le support de référence 7, et l'image du faisceau lumineux sur le support de référence 7 est acquise par le système d'acquisition d'images 4 (étape S2), par exemple un scanner. On obtient alors une image de référence.

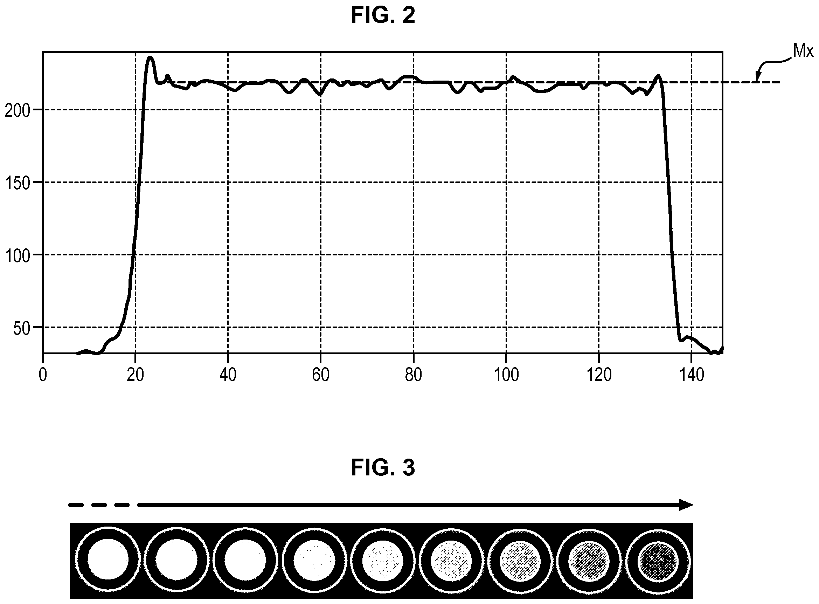

L'image de référence peut ensuite être convertie en nuances de gris par le système de traitement d'images 5. Le système de traitement d'images 5 peut par exemple mesurer les nuances de gris de la surface exposée au faisceau laser 3 dans cette image de référence en plusieurs points, notamment en réalisant le profil d'intensité en chaque point (figure 2). Enfin, l'intensité lumineuse de référence peut être déterminée en effectuant la moyenne Mx de la nuance de gris sur l'ensemble des points de la surface exposée (étape S3).

Les moyens de traitement de données 6 peuvent ensuite enregistrer l'intensité lumineuse de référence, en association avec la mesure des paramètres du faisceau lumineux de référence.

Le contrôle de la densité d'énergie du faisceau laser 3 peut alors être effectué régulièrement, de façon rapide, facile et peu coûteuse, en appliquant régulièrement le faisceau laser 3 sur le support de référence 7, et en surveillant l'évolution de l'intensité lumineuse au point d'impact du faisceau laser 3 sur ce support de référence 7, mesurée et déterminée dans les mêmes conditions que l'intensité lumineuse de référence. Il suffit en effet de répéter régulièrement, par exemple périodiquement, la mesure de l'intensité lumineuse.

Pour cela, après une durée déterminée, le faisceau lumineux du laser est appliqué sur le même support de référence 7 ou du moins sur un support de référence 7 identique ou similaire. De préférence, le faisceau lumineux est appliqué dans les mêmes conditions (hauteur, position et inclinaison par rapport au support de référence 7, etc.) que pour la réalisation de l'image de référence.

L'image du faisceau lumineux sur le support de référence 7 est acquise par le système d'acquisition d'images 4, par exemple le scanner (étape S4). On obtient alors une image de contrôle.

L'image de contrôle est ensuite traitée de manière analogue à l'image de référence, afin d'obtenir des données facilement comparables. Ainsi, l'image de contrôle peut être convertie en nuances de gris par le système de traitement d'images 5, qui peut notamment mesurer les nuances de gris de la surface exposée au faisceau laser 3 dans cette image en plusieurs points en réalisant le profil d'intensité en chaque point. Enfin, l'intensité lumineuse de l'image de contrôle peut être déterminée en effectuant la moyenne Mx de la nuance de gris sur l'ensemble des points de la surface exposée (étape S5).

L'intensité lumineuse de l'image de contrôle est alors comparée avec l'intensité lumineuse de référence, qui a été préalablement déterminée pour ce faisceau laser 3 et enregistrée dans les moyens de traitement de données 6 (étape S6).

Lorsque la différence entre l'intensité lumineuse de l'image de contrôle et l'intensité lumineuse de référence est inférieure à un seuil déterminé, la densité d'énergie est considérée comme stable. Le laser 2 n'est donc pas modifié, et un prochain contrôle peut être programmé selon la périodicité choisie pour le contrôle de la densité d'énergie du faisceau laser 3 (étape S7).

Le seuil déterminé peut par exemple être fixé expérimentalement en simulant une dégradation de la densité d'énergie du faisceau lumineux jusqu'à la limite d'acceptabilité, et en mesurant l'intensité lumineuse obtenue pour cette densité d'énergie du faisceau lumineux sur le support de référence 7.

Lors du prochain contrôle, les étapes S4 à S6 sont donc répétées avec les valeurs de l'intensité lumineuse de référence et des paramètres enregistrés dans les moyens de traitement de données 6.

En revanche, lorsque la différence entre l'intensité lumineuse de l'image de contrôle et l'intensité lumineuse de référence atteint ou dépasse le seuil déterminé, la densité d'énergie s'est dégradée (figure 3). Dans ce cas, on cherche alors le paramètre de la densité d'énergie qui est instable, en mesurant chacun des paramètres de manière conventionnelle avec les appareils spécifiques (étape S8).

Une fois que le ou les paramètres instables ont été déterminés, le laser 2 peut être réparé (S9).

On peut alors effectuer une nouvelle mesure de l'intensité lumineuse de référence et l'enregistrer avec les nouvelles valeurs des paramètres, selon les étapes S1 à S3 décrites ci-dessus, puis réitérer le procédé S en poursuivant le contrôle de la densité d'énergie du faisceau laser 3. On comprendra bien entendu que ce contrôle est réalisé en comparant les intensités lumineuses des images de contrôle avec la nouvelle intensité de référence, afin de tenir compte des modifications du laser 2.

En variante, il est également possible de conserver l'intensité lumineuse de référence sans refaire de nouvelles mesures, auquel cas le contrôle est réalisé en comparant les intensités lumineuses des images de contrôle avec l'intensité lumineuse de référence initialement déterminée.

Le support de référence 7 comprend de préférence une surface présentant un revêtement homogène, sensible à l'énergie reçue. Il peut s'agir notamment d'une plaque en alliage d'aluminium anodisée, la couche d'anodisation pouvant notamment être de couleur noire. Une telle plaque 7 en alliage d'aluminium anodisée permet ainsi d'améliorer la qualité du contrôle grâce à son revêtement homogène. En effet, lorsque le laser est appliqué sur une plaque 7 en alliage d'aluminium comprenant une couche d'anodisation, celui-ci fait fondre localement la couche d'anodisation. Lorsque la densité d'énergie du faisceau laser est suffisante, on obtient alors un éclat métallique et donc une intensité lumineuse maximale au moment de l'acquisition des images (S2, S4). En revanche, lorsque la densité d'énergie du faisceau diminue, on obtient une nuance de gris.

Dans une forme de réalisation, l'épaisseur de la plaque 7 en alliage d'aluminium est comprise entre environ 0.5 mm et environ 2 mm, typiquement de l'ordre d'1 mm, et est recouverte d'une couche d'anodisation présentant une épaisseur d'anodisation définie. Par exemple, l'épaisseur de la couche d'anodisation peut être comprise entre 0.5% et 3% de l'épaisseur de la plaque d'aluminium, de préférence de l'ordre de 1% à 2%, typiquement 1%. Le cas échéant, la valeur de l'épaisseur d'anodisation ainsi que sa qualité peuvent faire l'objet d'une surveillance dans le temps afin de garantir que la robustesse du support de référence 7.

D'autres supports de référence 7 peuvent bien entendu être utilisés, dans la mesure où ils permettent de détecter des variations d'intensité lumineuse avec suffisamment de précision.

Par ailleurs, la fréquence selon laquelle le contrôle de la densité d'énergie est réalisé peut être constante, ou varier en fonction de la différence entre l'intensité lumineuse de l'image de contrôle et l'intensité lumineuse de référence.

## Revendications

1. Procédé de contrôle (S) de la densité d'énergie d'un faisceau laser (3) à partir d'au moins deux paramètres du faisceau laser (3), le procédé (S) comprenant les étapes suivantes :
- appliquer régulièrement le faisceau laser (3) sur un support de référence (7) et mesurer (S4), à chaque application, l'intensité lumineuse obtenue sur ce support de référence,
- identifier (S6, S7, S8) une variation de l'intensité lumineuse sur le support de référence (7) entre au moins deux mesures, et
- lorsque la variation de l'intensité lumineuse est supérieure à un seuil donné, déterminer le ou les paramètres instables de la densité d'énergie du faisceau laser (3) (S8).

2. Procédé de contrôle (S) selon la revendication 1, dans lequel la densité d'énergie du faisceau laser (3) est contrôlée à partir de trois paramètres comprenant notamment la puissance, la vitesse et la taille du faisceau laser (3).

3. Procédé de contrôle (S) selon l'une des revendications 1 ou 2, dans lequel l'étape d'application et de mesure régulière de l'intensité lumineuse sur le support de référence (7) comprend les sous-étapes suivantes :
(i) appliquer le faisceau laser (3) sur un support de référence et acquérir une image du faisceau laser (3) sur ledit support de référence (S2), afin d'obtenir une image de référence,
(ii) déterminer l'intensité lumineuse au point d'application du faisceau laser (3) dans l'image de référence (S3), et
(iii) régulièrement, appliquer le faisceau laser (3) sur le support de référence (7) et acquérir une image du faisceau laser (3) sur ledit support de référence (7), afin d'obtenir une image de contrôle (S4), et déterminer l'intensité lumineuse sur le support de référence (7) au point d'application du faisceau laser (3) dans l'image de contrôle (S5), et
l'étape d'identification d'une variation d'intensité lumineuse comprend les sous-étapes suivantes :
(iv) comparer l'intensité lumineuse de l'image de contrôle ainsi obtenue avec l'intensité lumineuse de l'image de référence (S6), et
(v) en déduire la variation de la densité d'énergie du faisceau laser (3) (S7, S8).

4. Procédé de contrôle (S) selon la revendication 3, dans lequel l'intensité lumineuse est déterminée en mesurant les nuances de gris de l'image de référence et de l'image de contrôle (S3, S5).

5. Procédé de contrôle (S) selon la revendication 4, dans lequel les nuances de gris de l'image de référence et de l'image de contrôle sont mesurées en plusieurs points, de sorte que l'intensité lumineuse est déterminée en moyennant le profil d'intensité en chaque point de chaque image.

6. Procédé de contrôle (S) selon l'une des revendications 3 à 5, comprenant en outre une étape initiale (S1), préalablement à l'application du faisceau laser (3) sur une surface de référence afin d'acquérir l'image de référence (S2), au cours de laquelle on détermine une valeur initiale des paramètres, et dans lequel, lorsque la variation de l'intensité lumineuse est supérieure à un seuil donné, le procédé (S) comprend en outre les sous-étapes suivantes :
- déterminer la valeur des paramètres du faisceau laser (3) et la comparer à la valeur initiale desdits paramètres afin d'identifier le ou les paramètres instables, et
- modifier le laser (2) afin de re-stabiliser ledit(lesdits) paramètre(s) instable(s) (S9).

7. Procédé de contrôle (S) selon la revendication 6, dans lequel les étapes (i) à (iii) sont réitérées avec le faisceau laser (3) une fois modifié, afin de définir une nouvelle image de référence.

8. Procédé de contrôle (S) selon la revendication 7, dans lequel l'étape initiale (S1) est également réitérée.

9. Dispositif de contrôle (1) de la densité d'énergie d'un faisceau laser (3) à partir d'au moins deux paramètres du faisceau laser (3), lesdits paramètres comprenant une puissance, une vitesse et/ou une taille du faisceau laser (3), le dispositif étant **caractérisé en ce qu'**il est apte à contrôler la densité d'énergie du faisceau laser (3) selon l'une des revendications 1 à 8, et **en ce qu'**il comprend:
- un système d'acquisition d'images (4), configuré pour acquérir des images du faisceau laser (3) sur le support de référence (7), et
- un système de traitement d'images (5), adapté pour comparer l'intensité lumineuse des différentes images acquises par le système d'acquisition d'images (5) et identifier une variation de l'intensité lumineuse sur le support de référence (7) entre au moins deux mesures, et
- des moyens de traitement de données (6), adaptés pour déterminer, à partir de la variation de l'intensité lumineuse, si au moins l'un des paramètres du faisceau laser (3) est instable.

10. Dispositif de contrôle (1) selon la revendication 9, dans lequel le support de référence (7) comprend un revêtement homogène.

11. Dispositif de contrôle (1) selon l'une des revendications 9 ou 10, dans lequel le support de référence (7) comprend une plaque en alliage d'aluminium.

12. Dispositif de contrôle (1) selon la revendication 11, dans lequel la plaque en alliage d'aluminium est anodisée et comprend une couche d'anodisation.

13. Dispositif de contrôle (1) selon la revendication 12, dans lequel la couche d'anodisation est de couleur noire.

14. Dispositif de contrôle (1) selon l'une des revendications 12 ou 13, dans lequel la couche d'anodisation présente une épaisseur comprise entre 0.5% et 3% d'une épaisseur de la plaque en alliage d'aluminium (7), de préférence de l'ordre de 1%.

15. Dispositif de contrôle (1) selon la revendication 14, dans lequel l'épaisseur de la plaque (7) en alliage d'aluminium est de l'ordre d'1 mm et l'épaisseur de la couche d'anodisation est de l'ordre de 0.01 mm.

## Patentansprüche

1. Verfahren zur Überwachung (S) der Energiedichte eines Laserstrahls (3) ausgehend von mindestens zwei Parametern des Laserstrahls (3), wobei das Verfahren (S) die folgenden Schritte umfasst:
- regelmäßiges Anwenden des Laserstrahls (3) auf einer Referenzunterlage (7) und Messen (S4), bei jeder Anwendung, die auf dieser Referenzunterlage erhaltene Lichtstärke,
- Identifizieren (S6, S7, S8) einer Schwankung der Lichtstärke auf der Referenzunterlage (7) zwischen mindestens zwei Messungen, und
- wenn die Schwankung der Lichtstärke über einem bestimmten Grenzwert liegt, Bestimmen des oder der instabilen Parameter der Energiedichte des Laserstrahls (3) (S8).

2. Überwachungsverfahren (S) nach Anspruch 1, wobei die Energiedichte des Laserstrahls (3) ausgehend von drei Parametern überwacht wird, umfassend vor allem die Leistung, die Geschwindigkeit und die Größe des Laserstrahls (3).

3. Überwachungsverfahren (S) nach einem der Ansprüche 1 oder 2, wobei der Schritt des Anwendens und regelmäßigen Messens der Lichtstärke auf der Referenzunterlage (7) die folgenden Unterschritte umfasst:
(i) Anwenden des Laserstrahls (3) auf einer Referenzunterlage und Erfassen eines Bildes des Laserstrahls (3) auf der Referenzunterlage (S2), um ein Referenzbild zu erhalten,
(ii) Bestimmen der Lichtstärke am Punkt der Anwendung des Laserstrahls (3) in dem Referenzbild (S3), und
(iii) regelmäßiges Anwenden des Laserstrahls (3) auf der Referenzunterlage (7) und Erfassen eines Bildes des Laserstrahls (3) auf der Referenzunterlage (7), um ein Überwachungsbild (S4) zu erhalten, und Bestimmen der Lichtstärke auf der Referenzunterlage (7) am Punkt der Anwendung des Laserstrahls (3) in dem Überwachungsbild (S5), und
wobei der Schritt der Identifizierung einer Lichtstärkenschwankung die folgenden Unterschritte umfasst:
(iv) Vergleichen der Lichtstärke des derart erhaltenen Überwachungsbildes mit der Lichtstärke des Referenzbildes (S6), und
(v) Ableiten daraus der Schwankung der Energiedichte des Laserstrahls (3) (S7, S8).

4. Überwachungsverfahren (S) nach Anspruch 3, wobei die Lichtstärke durch Messen der Graunuancen des Referenzbildes und des Überwachungsbildes (S3, S5) bestimmt wird.

5. Überwachungsverfahren (S) nach Anspruch 4, wobei die Graunuancen des Referenzbildes und des Überwachungsbildes an mehreren Punkten gemessen werden, so dass die Lichtstärke durch Mitteln des Stärkeprofils jedes Punktes jedes Bildes bestimmt wird.

6. Überwachungsverfahren (S) nach einem der Ansprüche 3 bis 5, umfassend ferner einen Anfangsschritt (S1) vor dem Anwenden des Laserstrahls (3) auf einer Referenzfläche, um das Referenzbild (S2) zu erfassen, bei dem ein Anfangswert der Parameter bestimmt wird, und wobei, wenn die Schwankung der Lichtstärke größer als ein bestimmter Grenzwert ist, das Verfahren (S) ferner die folgenden Unterschritte umfasst:
- Bestimmen des Wertes der Parameter des Laserstrahls (3) und Vergleichen desselben mit dem Anfangswert der Parameter, um den oder die instabilen Parameter zu bestimmen, und
- Modifizieren des Lasers (2), um den/die instabile/n Parameter erneut zu stabilisieren (S9).

7. Überwachungsverfahren (S) nach Anspruch 6, wobei die Schritte (i) bis (iii) mit dem einmal modifizierten Laserstrahl (3) wiederholt werden, um ein neues Referenzbild zu definieren.

8. Überwachungsverfahren (S) nach Anspruch 7, wobei der Anfangsschritt (S1) ebenfalls wiederholt wird.

9. Vorrichtung zur Überwachung (1) der Energiedichte eines Laserstrahls (3) ausgehend von mindestens zwei Parametern des Laserstrahls (3), wobei die Parameter eine Leistung, eine Geschwindigkeit und/oder eine Größe des Laserstrahls (3) umfassen, wobei die Vorrichtung **dadurch gekennzeichnet ist, dass** sie imstande ist, die Energiedichte des Laserstrahls (3) nach einem der Ansprüche 1 bis 8 zu überwachen, und dass sie umfasst:
- ein Bilderfassungssystem (4), das konfiguriert ist, um Bilder des Laserstrahls (3) auf der Referenzunterlage (7) zu erfassen, und
- ein Bildverarbeitungssystem (5), das zum Vergleichen der Lichtstärke der verschiedenen, von dem Bilderfassungssystem (5) erfassten Bilder und zum Identifizieren einer Schwankung der Lichtstärke auf der Referenzunterlage (7) zwischen mindestens zwei Messungen geeignet ist, und
- Datenverarbeitungsmittel (6), die, ausgehend von der Schwankung der Lichtstärke, zum Bestimmen geeignet sind, ob mindestens einer der Parameter des Laserstrahls (3) instabil ist.

10. Überwachungsvorrichtung (1) nach Anspruch 9, wobei die Referenzunterlage (7) eine homogene Beschichtung umfasst.

11. Überwachungsvorrichtung (1) nach einem der Ansprüche 9 oder 10, wobei die Referenzunterlage (7) eine Platte aus Aluminiumlegierung umfasst.

12. Überwachungsvorrichtung (1) nach Anspruch 11, wobei die Platte aus Aluminiumlegierung anodisiert ist und eine Anodisierungsschicht umfasst.

13. Überwachungsvorrichtung (1) nach Anspruch 12, wobei die Anodisierungsschicht schwarz ist.

14. Überwachungsvorrichtung (1) nach einem der Ansprüche 12 oder 13, wobei die Anodisierungsschicht eine Stärke aufweist, die zwischen 0,5 % und 3 % liegt, und eine Stärke der Platte aus Aluminiumlegierung (7) vorzugsweise von zirka 1 %.

15. Überwachungsvorrichtung (1) nach Anspruch 14, wobei die Stärke der Platte (7) aus Aluminiumlegierung zirka 1 mm beträgt und die Stärke der Anodisierungsschicht zirka 0,01 mm beträgt.

## Claims

1. A method for controlling (S) the energy density of a laser beam (3) from at least two parameters of the laser beam (3), the method (S) comprising the following steps of:
- regularly applying the laser beam (3) on a reference medium (7) and measuring (S4), at each application, the light intensity obtained on this reference medium,
- identifying (S6, S7, S8) a variation of the light intensity on the reference medium (7) between at least two measurements, and
- when the variation of the light intensity is greater than a given threshold, determining the unstable parameter(s) of the energy density of the laser beam (3) (S8).

2. The control method (S) according to claim 1, wherein the energy density of the laser beam (3) is controlled from three parameters comprising in particular the power, speed and size of the laser beam (3) .

3. The control method (S) according to any of claims 1 or 2, wherein the step of applying and regularly measuring the light intensity on the reference medium (7) comprises the following sub-steps of:
(i) applying the laser beam (3) on a reference medium and acquiring an image of the laser beam (3) on said reference medium (S2), so to obtain a reference image,
(ii) determining the light intensity at the point of application of the laser beam (3) in the reference image (S3), and
(iii) regularly applying the laser beam (3) on the reference medium (7) and acquiring an image of the laser beam (3) on said reference medium (7), in order to obtain a control image (S4), and determining the light intensity on the reference medium (7) at the point of application of the laser beam (3) in the control image (S5), and
the step of identifying a variation in light intensity comprises the following sub-steps:
(iv) comparing the light intensity of the control image thus obtained with the light intensity of the reference image (S6), and
(v) deducing therefrom the variation of the energy density of the laser beam (3) (S7, S8).

4. The control method (S) according to claim 3, wherein the light intensity is determined by measuring the shades of gray of the reference image and of the control image (S3, S5).

5. The control method (S) according to claim 4, wherein the shades of gray of the reference image and of the control image are measured in several points, so that the light intensity is determined by averaging the intensity profile at each point of each image.

6. The control method (S) according to any of claims 3 to 5, further comprising an initial step (S1) prior to application of the laser beam (3) on a reference surface in order to acquire the reference image (S2), during which an initial value of the parameters is determined, and wherein, when the variation of the light intensity is greater than a given threshold, the method (S) further comprises the following sub-steps:
- determining the value of the parameters of the laser beam (3) and comparing it with the initial value of said parameters in order to identify the unstable parameter(s), and
- modifying the laser (2) in order to re-stabilize said unstable parameter(s) (S9).

7. The control method (S) according to claim 6, wherein the steps (i) to (iii) are repeated with the laser beam (3) once modified, in order to define a new reference image.

8. The control method (S) according to claim 7, wherein the initial step (S1) is also repeated.

9. A device for controlling (1) the energy density of a beam laser (3) from at least two parameters of the laser beam (3), said parameters comprising a power, a speed and/or a size of the laser beam (3), the device being **characterized in that** it is suitable for controlling the energy density of the laser beam (3) according to any of claims 1 to 8, and **in that** it comprises:
- an image acquisition system (4) configured to acquire images of the laser beam (3) on the reference medium (7), and
- an image processing system (5) adapted to compare the light intensity of the different images acquired by the image acquisition system (5) and identify a variation in light intensity on the reference medium (7) between at least two measurements, and
- data processing means (6) adapted to determine, from the variation in light intensity, whether at least one of the parameters of the laser beam (3) is unstable.

10. The control device (1) according to claim 9, wherein the reference medium (7) comprises a homogeneous coating.

11. The control device (1) according to any of claims 9 or 10, wherein the reference medium (7) comprises an aluminum alloy plate.

12. The control device (1) according to claim 11, wherein the aluminum alloy plate is anodized and comprises an anodizing layer.

13. The control device (1) according to claim 12, wherein the anodizing layer is of black color.

14. The control device (1) according to any of claims 12 or 13, wherein the anodizing layer has a thickness ranging between 0.5 % and 3 % of a thickness of the aluminum alloy plate (7), preferably in the order of 1 %.

15. The control device (1) according to claim 14, wherein the thickness of the aluminum alloy plate (7) is in the order of 1 mm and the thickness of the anodizing layer is in the order of 0.01 mm.
